# EUROPEAN PATENT SPECIFICATION

(11) **EP 1 022 473 B1**
(45) Date of publication and mention of the grant of the patent: **07.11.2001**
(21) Application number: 00104787.7
(22) Date of filing: 24.03.1997
(51) Int. Cl.: F16B 2/08, F16L 33/02

(54) **Puzzle-lock compression ring**
Spannband mit ineinandergreifenden Enden
Collier de serrage à extrémités emboîtables

(30) Priority: 17.04.1996 US 15700
(43) Date of publication of application: 26.07.2000
(62) Divisional of application: 97104979.6
(73) Proprietor: Hans Oetiker AG Maschinen- und Apparatefabrik, 8812 Horgen (CH)
(72) Inventor: Oetiker, Hans, 8812 Horgen (CH)
(74) Representative: Strehl Schübel-Hopf & Partner

(56) References cited:
- EP-A- 0 543 338
- DE-C- 887 835
- FR-A- 2 645 220
- FR-A- 2 664 347
- GB-A- 2 014 642

## Description

### BACKGROUND OF THE INVENTION

The present invention relates to a compression ring with a so-called puzzle-lock mechanical connection which is adapted to be shrunk over the object to be fastened thereby. Compression rings of this type are known from US-A-5,001,816 (which discloses the features included in the first part of each of claims 1 and 8) and US-A-5,185,908. These prior art puzzle-lock compression rings proved quite successful. Although US-A-5,001,816 suggests spot-welding, laser-beam welding and material displacement by the use of a punch prick in order to stabilise the puzzle-lock connection, the known compression rings occasionally re-open during transport to the customer.

### SUMMARY OF THE INVENTION

It is an object of this invention to provide a puzzle-lock compression ring which obviates the aforementioned shortcomings and drawbacks in a simple and cost-effective manner, and whose puzzle-lock connection has an improved holding ability.

These objects are met by the compression ring defined in claim 1 and its manufacturing method defined in claim 8.

The puzzle-lock compression ring of the invention effectively avoids re-opening during shipment.

According to one embodiment of the present invention, the puzzle-lock connection has been improved by providing additional material in critical areas previously subjected to tearing or lifting up as a result of stresses caused by circumferential forces in the ring without any substantial reduction in the length of the force-absorbing abutment surfaces in the puzzle-lock connection which extend transversely to the circumferential direction of the compression ring. This is achieved in that the enlarged head portion of the tongue member is provided with a rounded-off configuration between the lateral surfaces of the enlarged head portion and the transversely extending end surface while maintaining a substantially rectangular relationships between the transversely extending abutment surfaces at the beginning of the enlarged head portion and the corresponding adjoining longitudinally extending abutment surfaces formed in the male part and by the recess in the female part of the puzzle lock connection.

Additionally according to a preferred embodiment of the present invention the inner and outer compression ring surfaces of certain areas of the puzzle lock are subjected to a swaging action displacing material in such a manner that the likelihood of reopening of the puzzle lock is reduced, and its holding ability with respect to radially directed forces is increased.

### DETAILED DESCRIPTION OF THE DRAWINGS

These and other objects, features and advantages of the present invention will become more apparent from the following description when taken in conjunction with the accompanying drawing, which shows, for purposes of illustration only, one embodiment in accordance with the present invention, and wherein:
Figure 1 is a plan view of a blank of a puzzle-lock compression ring of this invention in flat condition;
Figure 2 is an axial elevational view of the compression ring formed by means of the blank of Figure 1;
Figure 3 is an enlarged view of the puzzle lock connection of a preferred embodiment of this invention;
Figure 4 is a cross-sectional view taken along line 4-4 of Figure 3;
Figure 5 is a partial plan view on a puzzle-lock compression ring of the prior art shown in Figure 1 of my prior U.S. patents;
Figure 6 is a partial plan view of a prior art puzzle-lock connection as shown in Figure 2 of my aforementioned patents;
Figure 7 is a schematic elevational view showing an apparatus for carrying out the swaging operation;
Figure 8 is an enlarged cross-sectional view, similar to Figure 4, and illustrating details of the areas of the compression ring subjected to a swaging operation; and
Figure 9 is an enlarged cross-sectional view illustrating details of the swaging teeth.

### DETAILED DESCRIPTION OF THE DRAWINGS

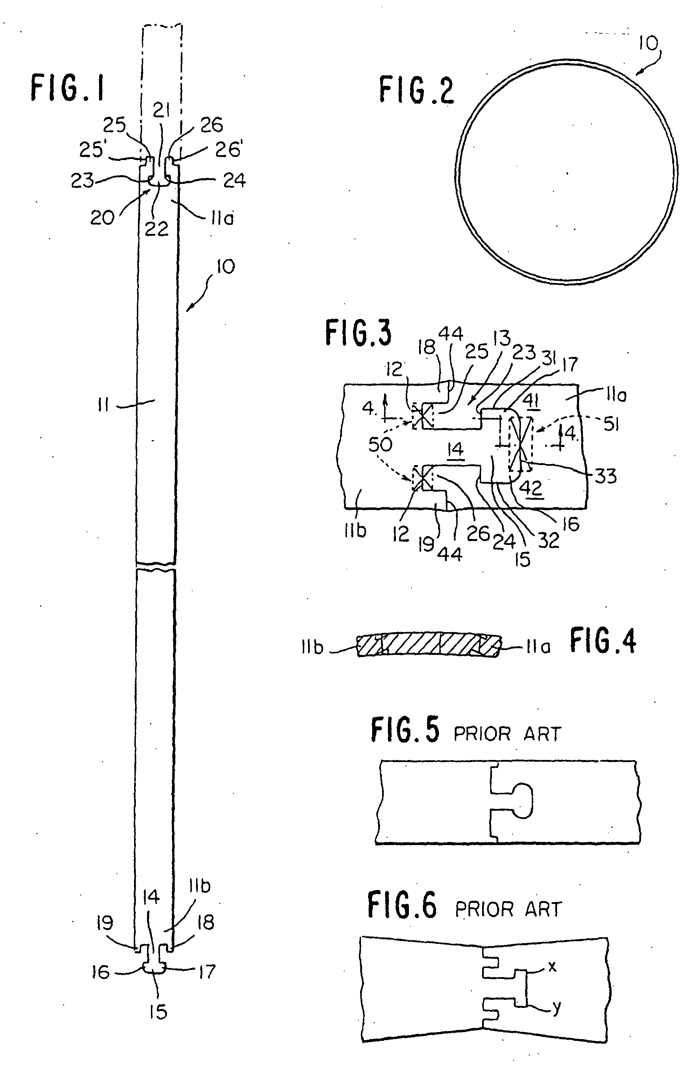

Referring now to the drawing, wherein like reference numerals are used throughout the various views to designate like parts, reference numeral **10** generally designates the blank **11** for the compression ring (Figure 1), respectively, the compression ring (Figure 2) formed with the blank **11** of Figure 1. As explained in the aforementioned patents, transversely extending mutually engaging force-absorbing abutment surfaces along certain edges in the mechanical connection generally designated by reference numeral 13 and resembling a puzzle-type connection serve the purpose of absorbing compression and tensional forces in the compression ring. The male and female configurations of the mechanical connection **13** including these abutment surfaces also serve for the purpose of connecting the two end portions **11a** and **11b** of the blank **11** with each other. The male end portion **11b** of the puzzle-lock connection **13** includes a retaining tongue-like portion **14** which is provided with an enlarged head portion **15** (Figures 1 and 3). The enlarged head portion **15** includes laterally extending lug portions **16** and **17** (Figure 3) delimited by rectilinear lateral abutment surfaces **31** and **32** and engaging in a complementarily shaped enlarged recess portion **22** adjoining the channel-like recess portion **21** for the tongue-like portion **14** in the female part generally designated by reference numeral **20** provided in the end portion **11a** of the blank **11** (Figure 1). The tongue-like member **14** and its enlarged head portion **15** thereby engages in the channel-like recess portion **21** and in the enlarged recess portion **22**, respectively, of the recess **20** which extends in the longitudinal direction of the blank **11** (Figure 1) so that the tongue-like portion **14** engages with its enlarged head portion **15** from behind at the abutment surfaces **23** and **24**.

If the mechanical connection **13** of the compression ring according to this invention is stressed in tension or compression, there exists the tendency of the areas of the end portion 11a located behind the abutment surfaces **23** and **24** to move laterally away from the tongue-like portion **14**, as a result of which the tongue-like portion **14** together with its enlarged head portion **15** might be pulled or pushed out of the recess **20** because the channel-like recess portion **21** would then open up. To counteract this tendency, two lateral lug portions **18** and **19** are provided in the lateral areas of the male part of the mechanical connection in the end portion **11b** which abut along the longitudinally extending edge surfaces **25'** and **26'** of the longitudinally extending portions **25** and **26** in the female part of the mechanical connection **13** to counteract any lateral bending out of the two portions **25** and **26**. Owing to this particular arrangement of the two lug portions **18** and **19**, the mechanical connection of the end portions **11a** and **11b** is effectively secured against tensional or compression forces.

In the prior art embodiment illustrated in Figure 5 of this application, the enlarged head portion includes rounded-off lateral lug portions of semi-circular configurations while in the prior art embodiment illustrated in Figure 6 herein, the enlarged head portion is of rectangular configuration with right angles in the four corners thereof.

It has now been discovered surprisingly that the holding ability of the mechanical connection can be significantly improved if the right angle relationship x and y shown in Figure 6 is replaced in only these two corners of the enlarged head portion by a rounded-off configuration. The right angle relationship between transversely extending abutment surfaces **23, 24** and the lateral abutment surfaces **31, 32** is maintained in order to realize as large as possible transversely extending abutment surfaces **23** and **24.** On the other hand, the prior right angle relationship between the lateral abutment surfaces **31** and **32** and the transversely extending end surface **33** of the enlarged head portion **15** is now changed to a rounded-off configuration involving a quarter-circle with a small radius. As a result of this arrangement, the additional material present in the areas **41** and **42** of the female part in the end portion **11a** reduces the risk of tearing and/or lifting up of the lateral parts of the end portion **11a**. Tests have indicated that a significant improvement is obtainable with this new configuration. The right angle relationship between other adjoining abutment surfaces is maintained to the extent practicable to maintain transversely extending abutment surfaces, especially at the abutment surfaces **12** in the swaging areas **50**, which are as long as possible.

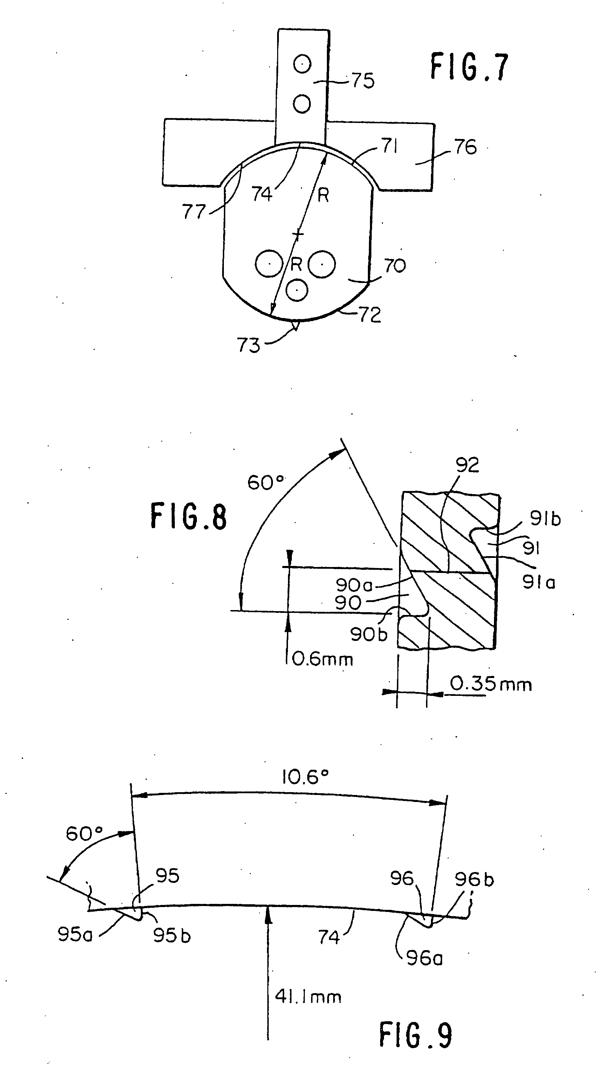

According to another feature of one embodiment of this invention, the joints formed along mutually engaging abutment surfaces **12** and **33** are subjected to a swaging action in the areas indicated in Figure 3 in dash lines and designated by reference numerals **50** and **51** with the use of more or less conventional means to displace material as shown in Figures 4 and 8 in order to lessen the likelihood of relative movement in the radial direction of the compression ring between the two end portions **11a** and **11b**.

The following Table I indicates the significant improvement in the holding ability of compression rings with swaged puzzle-lock connection versus the same compression rings with non-swaged mechanical connection. In all tests the compression rings were made from "Galfan" band steel material having a nominal diametric dimension of 95.9 mm. after shrinking, a band width of 10 mm. and a band thickness of 1.2 mm. As all tests were carried out with compression rings in an as-manufactured condition, i.e., before shrinking to demonstrate the greater holding ability during shipping, all test samples had a diametric dimension of 99 mm. The swaged test samples had three swaging areas as indicated in dash lines in Figure 3 and generally designated by reference numerals **50** and **51**, whereby swaging was carried out internally and externally of the band in a symmetrical manner as shown in Figures 4 and 8. The test equipment involved conventional principles of operation with approximately π-shaped, tapering segments forming an internal small circular configuration and an external larger circular configuration. The compression ring test samples were thereby placed about the outer circumference of the segments and a tapering circular mandrel-like member was slowly driven through the internal circular opening of the segments in such a manner that the diametric dimension of the tapering mandrel-like member gradually increased, thereby exerting ever-larger uniform radially directed forces on the segments. By measuring the downward force applied to the tapering mandrel-like member, for example, by a force-measuring cell located at the bottom of the mandrel-like member, the radial forces at which a test sample failed could be readily determined by multiplying the downward force by a constant factor of 28.05. The test results involving 20 test samples which were identical except that 10 samples involved non-swaged mechanical connections and 10 samples involved swaged mechanical connections are reproduced in Table I which shows that the holding ability of the same type of compression rings can be improved on the average by more than 100% in the as-manufactured condition, i.e., before being installed by shrinking. The radial forces at which failure occurred, i.e., at which the mechanical connection opened up, are expressed in Newton.

**TABLE I**

| RADIAL PRESSURE FAILURE TESTS | | |
|---|---|---|
| | Non-Swaged Newton | Swaged Newton |
| No. 1 | 347 | 614 |
| No. 2 | 234 | 599 |
| No. 3 | 246 | 672 |
| No. 4 | 345 | 613 |
| No. 5 | 274 | 654 |
| No. 6 | 300 | 640 |
| No. 7 | 283 | 621 |
| No. 8 | 269 | 724 |
| No. 9 | 275 | 609 |
| No. 10 | 315 | 628 |
| Average | 288.8 | 637.4 |

The dimensions of a typical sample of a compression ring with a nominal diameter of 95.9 mm., a band width of 10 mm. and a band thickness of 1.2 mm. and made from "Galfan" band steel material are as follows, it being understood that these dimensions are merely for purposes of illustration of one embodiment and are not to be construed as limitative of this invention because these dimensions may be varied as known to those skilled in the art.

In this typical non-limitative example of one embodiment in accordance with the present invention, the length of the clamping band having a 10 mm. width is determined by the diametric dimension required for the nominal diameter of the shrunk compression ring. The length of the tongue member taken from a transverse line coinciding with abutment surfaces **12** to the transverse outermost abutment surface **33** of the enlarged head **15** is 7.5 mm., the width of the enlarged head surface from lateral abutment surface **31** to lateral abutment surface **32** is 6 mm., the length of the lateral lug portions **18** and **19** from a transverse line coinciding with abutment surfaces **12** to a line coinciding with abutment surfaces **44** is 2 mm., the length from a line coinciding with abutment surfaces **44** to a transverse line coinciding with surfaces **23, 24** is 2.5 mm., and the radius of curvature in the head portion is 1 mm. The width of the centrally located tongue-like portion **14** is 3 mm., the width of the lug portions **18** and **19** is 1.5 mm., the width of the swaged areas **50** is 2 mm., the width of the swaged area **51** is 4 mm. and the thickness of the clamping band is 1.2 mm. All dimensions indicated are with the blank **11** in flat condition.

As shown in Figures 4 and 8, the material displacement is carried out both on the outside **11'** and the inside **11''** of the compression ring in a symmetrical manner in the two areas **50** and in the area **51** of Figure 3. As shown in Figure 8, each internal indentation **90** on the inner surface **11''** of the compression ring **10** and each external indentation **91** in the external surface **11'** of the compression ring **10** which are produced by swaging has a depth of about 0.35 mm. and is defined by the side surfaces **90a**, **90b** and **91a**, **91b,** whereby respective side surfaces **90a, 90b** and **91a, 91b** subtend an angle of about 60°, and whereby their mutual intersections as also their intersections with the inner and outer surfaces **11"** and **11'** of the ring **11** are rounded off with a radius of about 0.1 mm. The distance of the smaller side surface **90b** to the plane **92** of the cut represented, for example, but abutting surfaces **12** or **33** is about 0.6 mm.

Figure 7 illustrates schematically a device for carrying out the swaging operation which includes a core-like matrix member **70** with an external upper surface **71** and an external lower surface **72** each forming part of a circle with a radial dimension R of the inner surface of the completed compression ring. A stamping die **75**, which is actuated in any conventional known manner with the required force, is reciprocably guided in a relatively fixed machine part **76** to move to and fro during the swaging operation. The core-like matrix **70** is thereby fastened to the relatively fixed machine part **76** in any conventional manner (not shown) and is provided in its surface **72** with a small projection **73** to engage, for example, in a recess or small opening in the compression ring to properly position the same for the swaging operation. The matrix **70** as well as the stamping die **75** are thereby provided with small swaging teeth (Figure 9) to perform the swaging operation. In one embodiment of this invention using clamping rings of the type used with the tests of Table I, the width of the swaging action along the abutment surface **33** may be about 4 mm. and in the areas of the abutment surfaces **12** may be about 2 mm. The spacing between the external surface **71** on the matrix member **70** and the internal surfaces **74** and **77** of the stamping die **75** in its extended position and of the machine part **76** corresponds substantially to the thickness of the clamping band.

Figure 9 illustrates the shape of the swaging teeth which are provided on the surface **74** of the stamping die **75** and on the surface **71** of matrix member 70 of the machine of Figure 7, whereby the teeth are so located as to produce material displacement in the inner and outer surfaces **11''** and **11'** of the band material forming the compression ring within the swaging areas **50** and **51** as shown in Figure 8. As these swaging teeth have substantially the same shape in the surfaces **74** and **71**, only the swaging teeth **95** and **96** in surface **74** are shown in Figure 9. Each of these swaging teeth 95 and **96** are defined by side surfaces **95a, 95b** and **96a, 96b,** whereby respective side surfaces **95a, 95b** and **96a, 96b** subtend an angle of about 60°, and whereby their mutual intersections as also their intersections with surface **74** are rounded off with a radius of about 0.1 mm. The maximum outward projection distance of teeth 95 and **96** from surface **74** at the intersection of the side surfaces **95a**, **95b** and **96a, 96b** is about 0.35 mm. The spacing of these teeth in the circumferential direction and in the width direction are to conform to the dimension of the swaging areas **50** and **51** of Figures 3 and 8, whereby two such teeth **95** are provided spaced in the axial direction of the swaging die member **75** for the two swaging areas **50**.

The following tabulations (Figures 2A-9A) and graphs (Figures 2B-9B) indicate the improvement in holding ability of various sizes of compression rings as shown in Figures 3 and 4 and made from different materials but all provided with swaged puzzle-lock connections as described above. In all of these tests, the compression rings were shrunk by 4 mm. in diameter prior to the measurements. Measurements were again made on a machine in which the shrunk compression rings are placed along the circular outer surfaces of a number of π-shaped tapering segments, forming internally a smaller diameter circular opening, whereby a tapering mandrel is forced down through this smaller opening with predetermined downwardly directed force which is measured by a load cell from which are derived the radial forces. In the diagrams of Figures 2B-9B, the radial forces are thereby given in daN (Newton x 10).

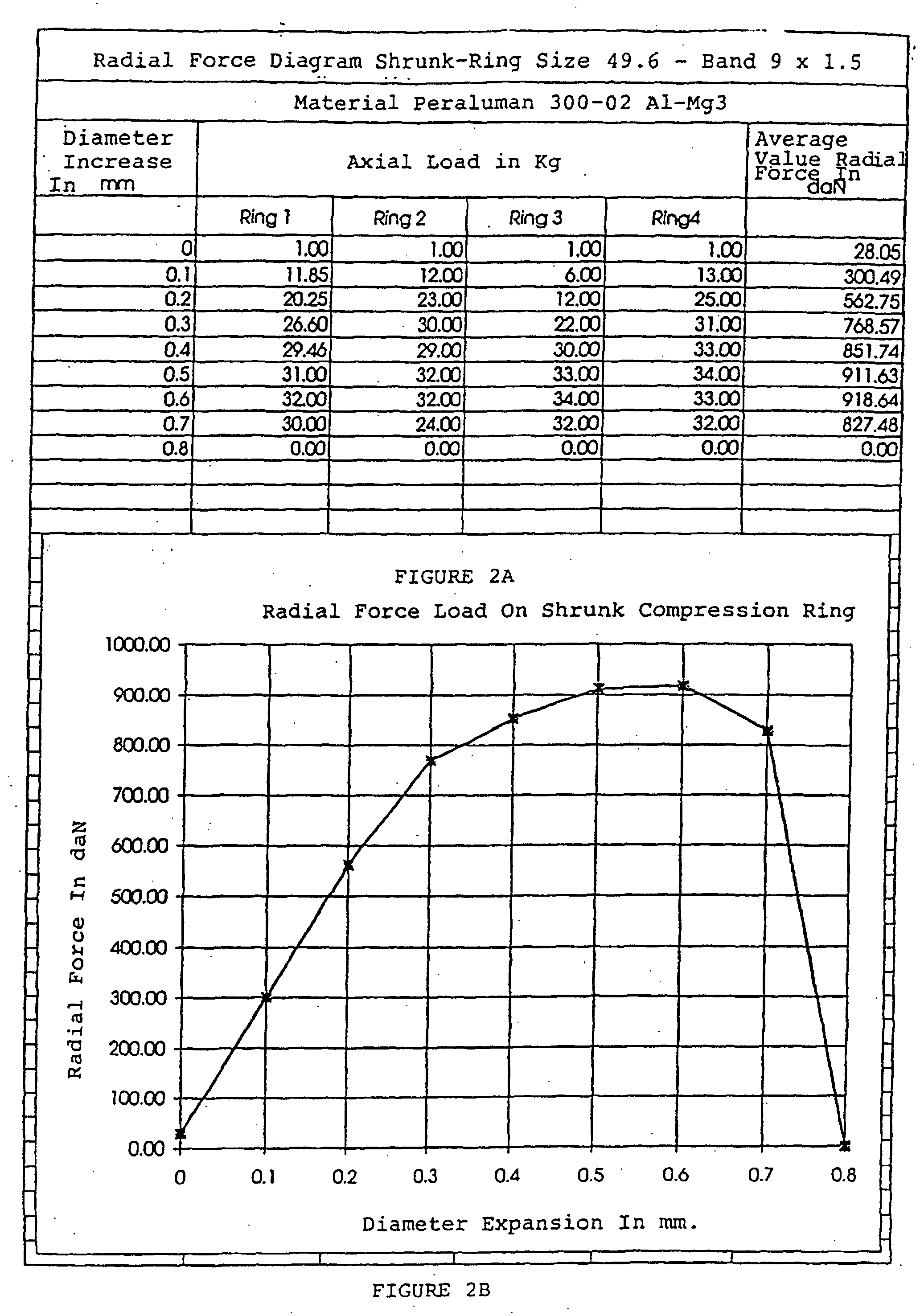

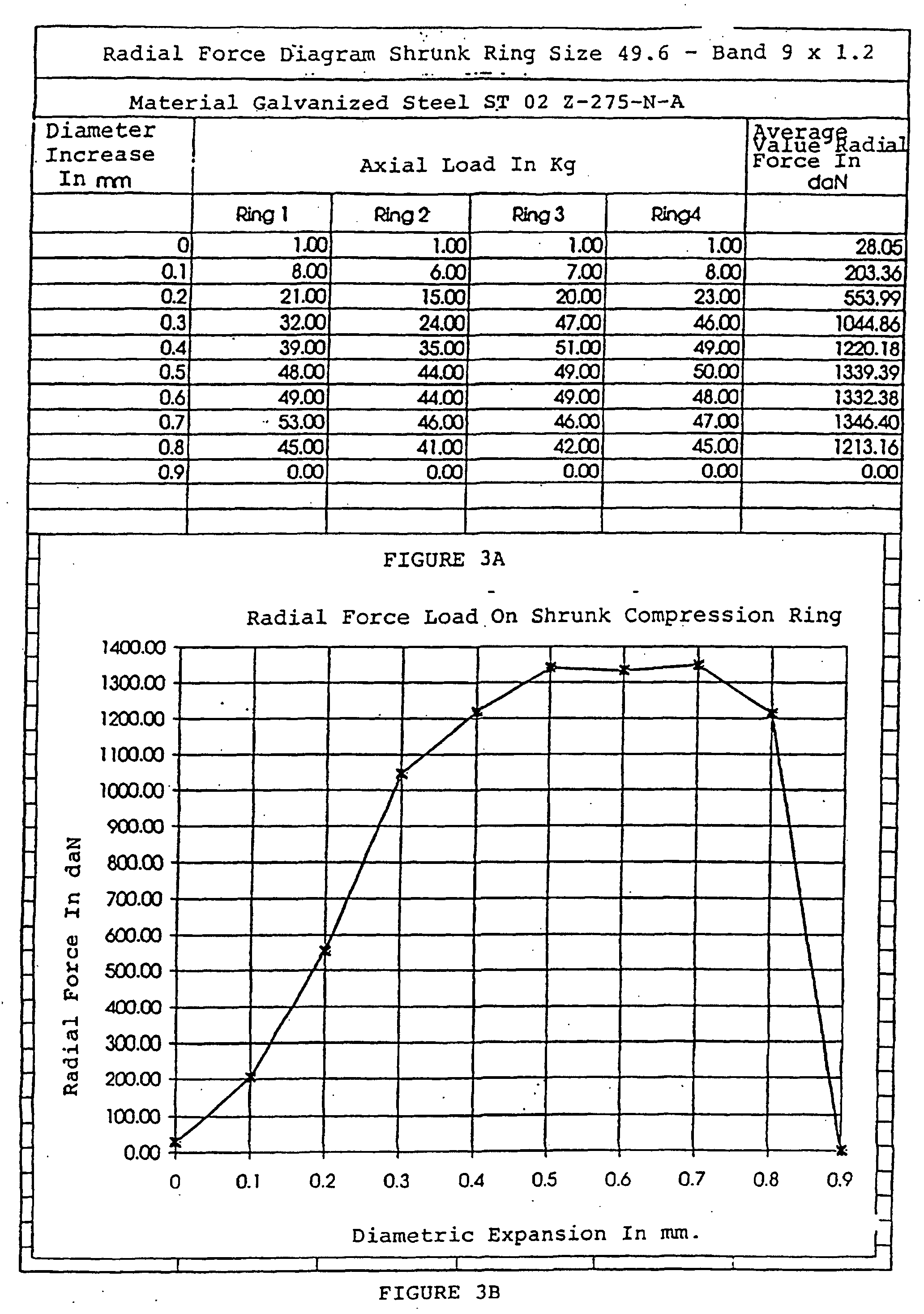

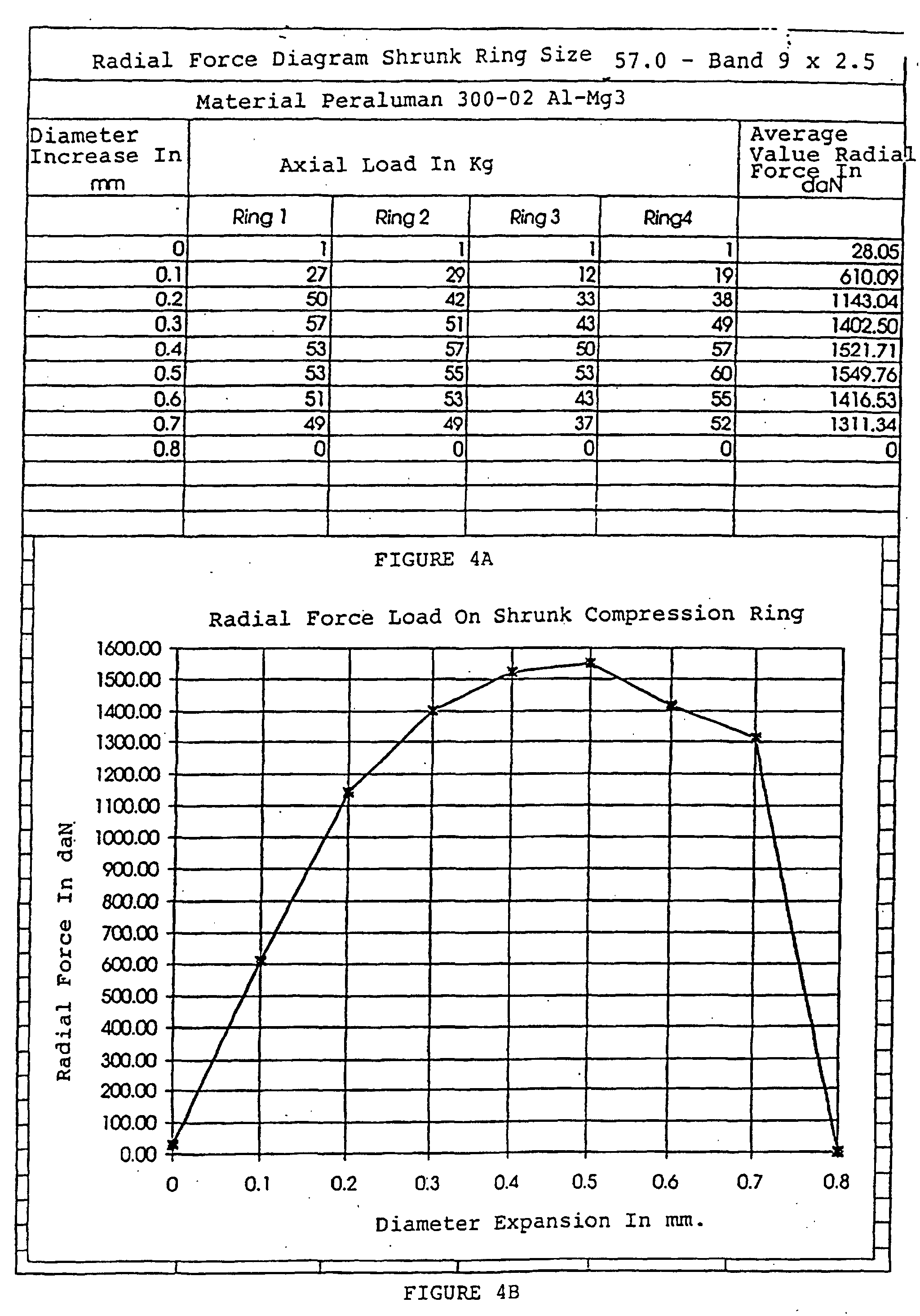

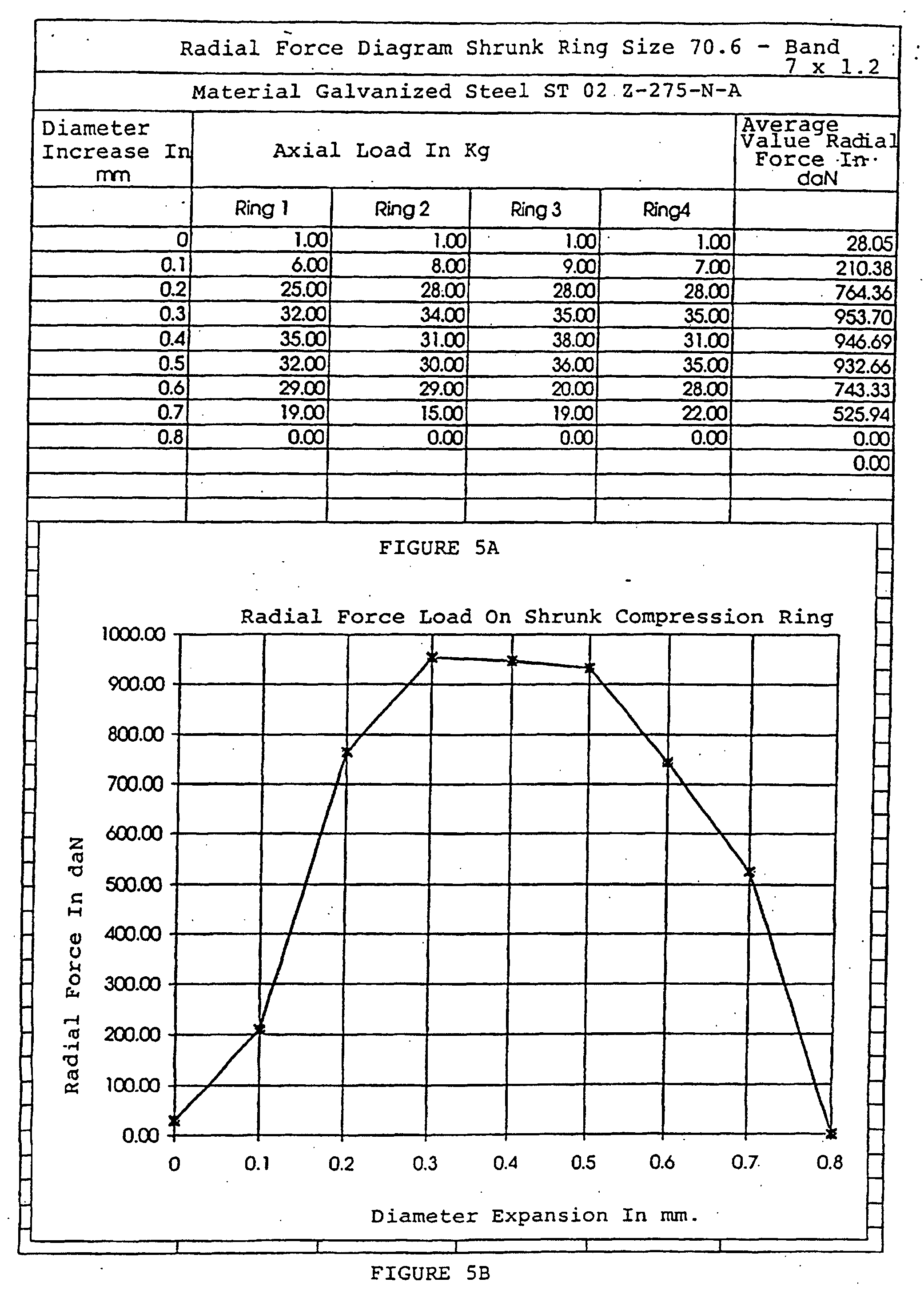

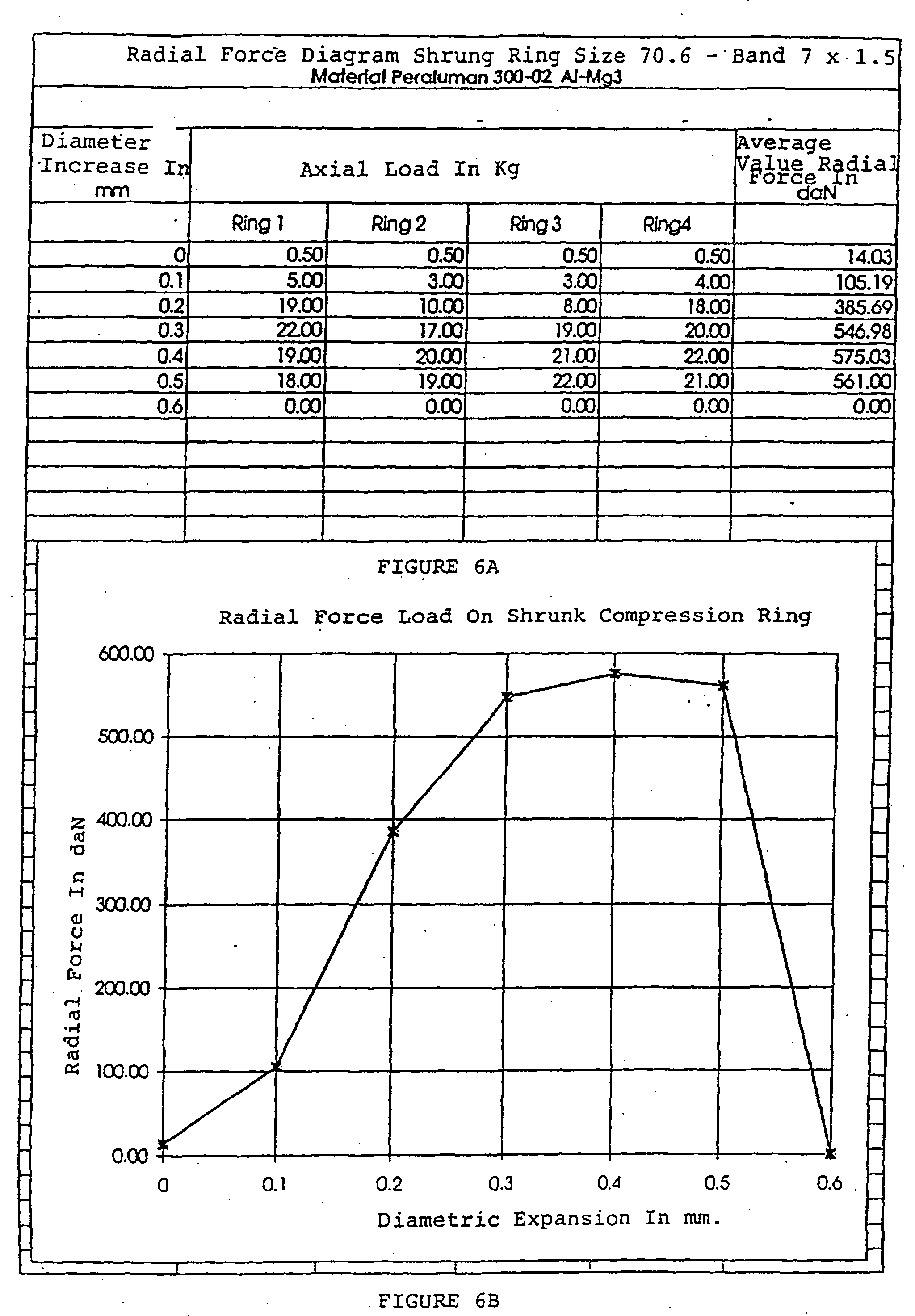

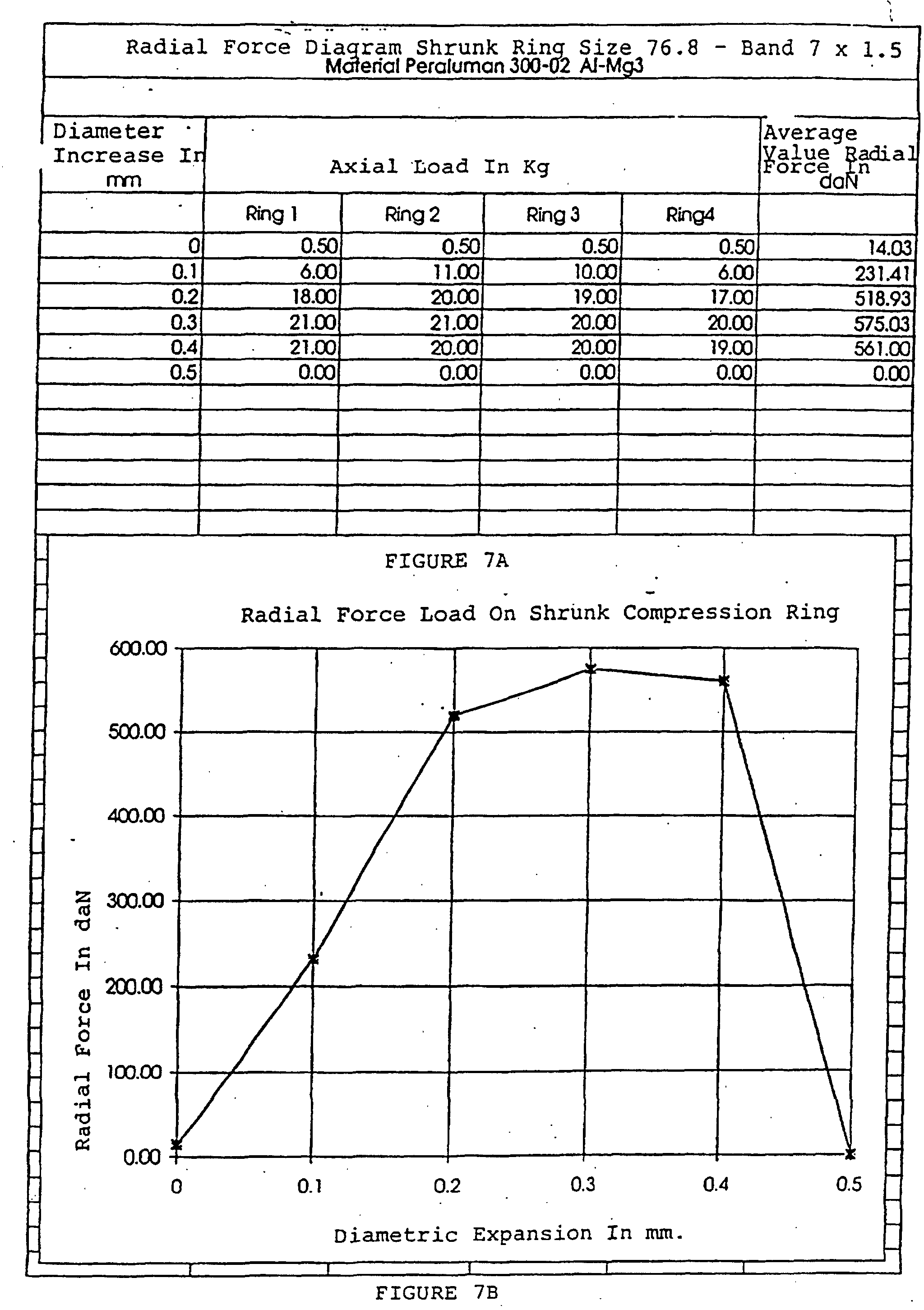

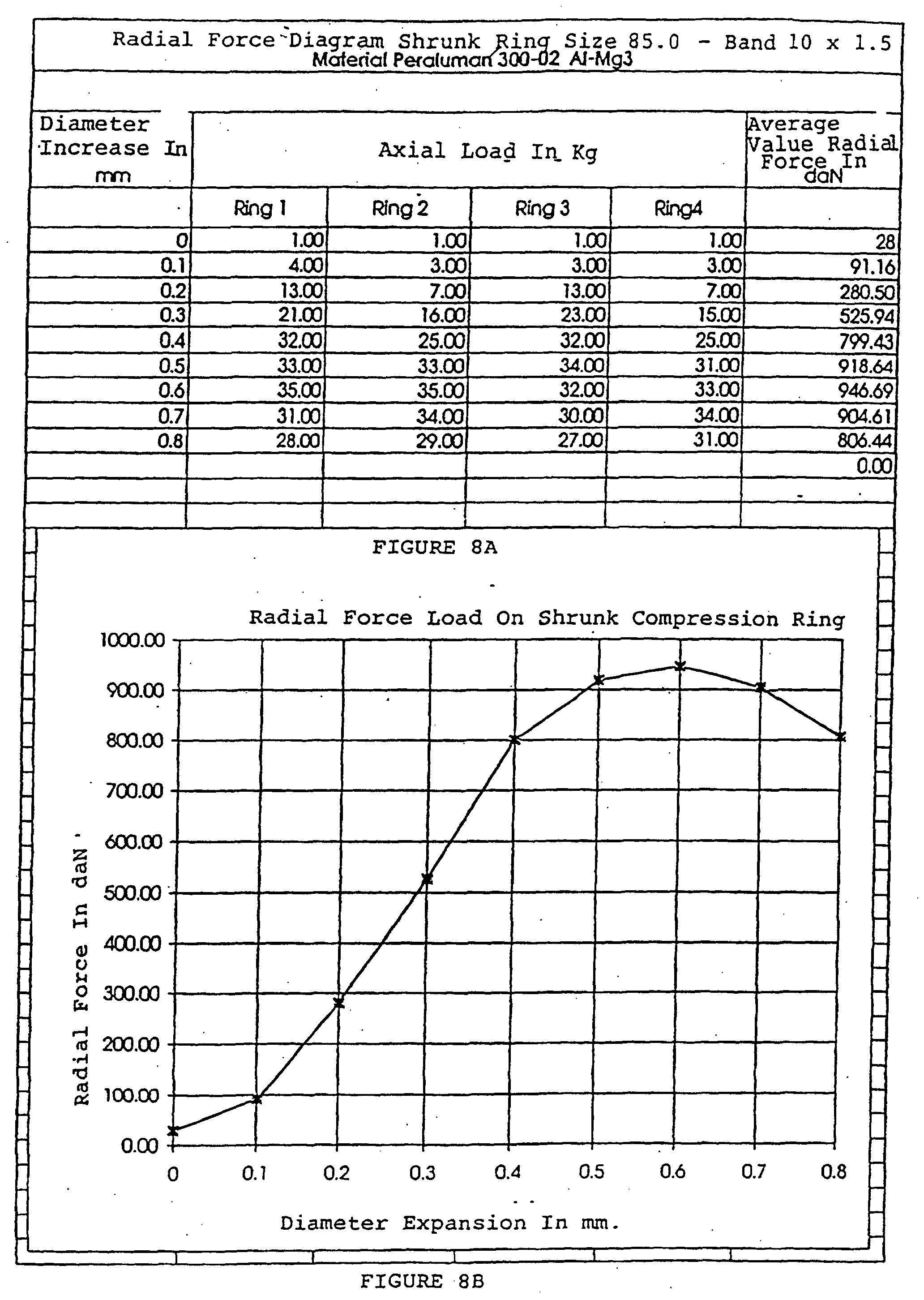

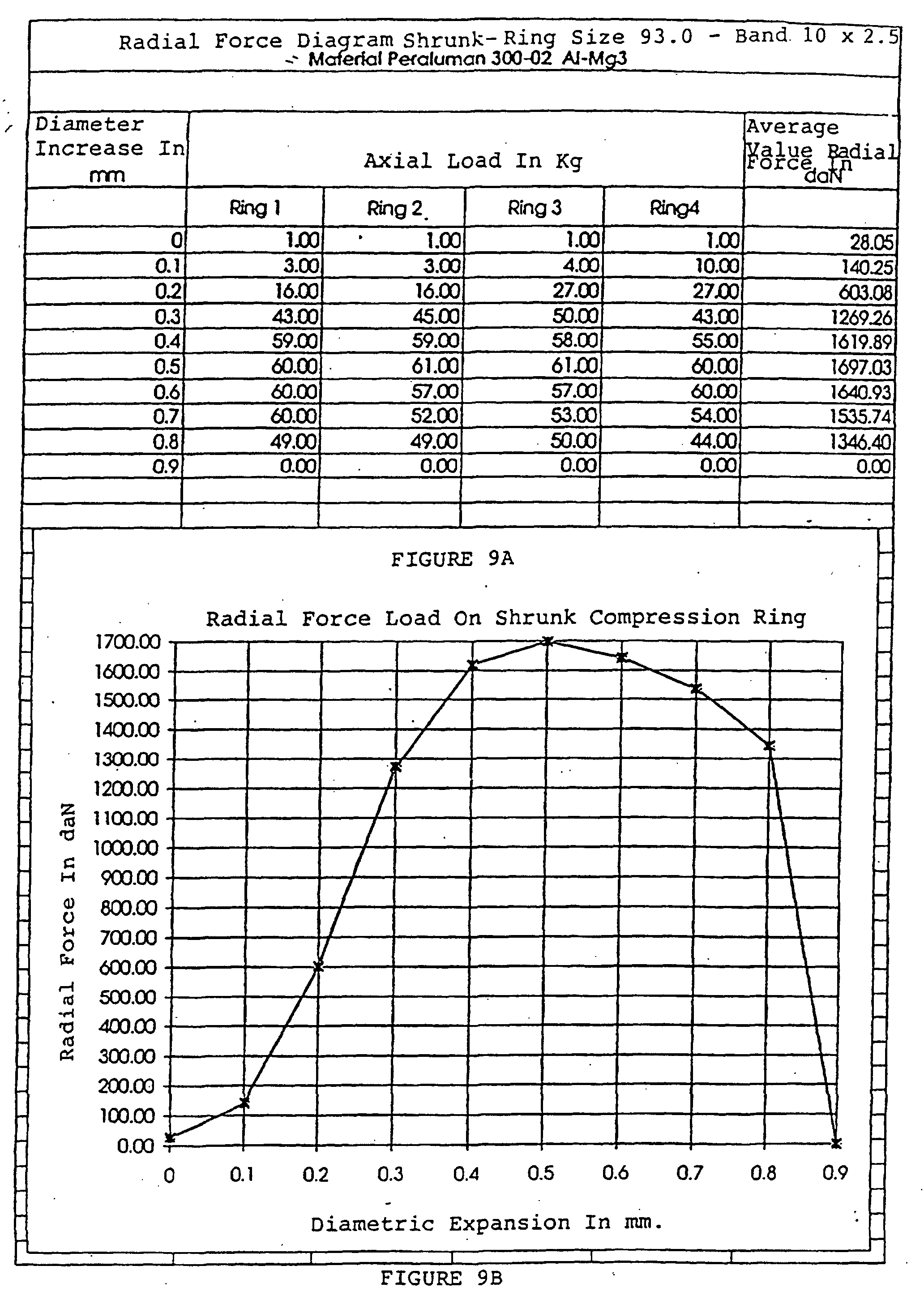

While I have shown and described the details of several embodiments in accordance with this invention, it is understood that the same is not limited thereto but is susceptible of numerous changes and modifications as known to those skilled in the art. For example, the swaging operation may be part of a completely automatic manufacture of such compression rings.

## Claims

1. A compression ring with a mechanical connection in the form of complementary male and female parts in respective end portions (11a, 11b) of the ring, the male part having a tongue-like extension (14) with an enlarged head portion (15) adapted to engage in a recess (22) of complementary shape in the female part,
wherein the head portion (15) includes
transverse abutment surfaces (23, 24) extending at substantially right angles to substantially longitudinally extending abutment surfaces of the tongue-like extension (14),
lateral abutment surfaces (31, 32) extending substantially in the longitudinal direction of the compression ring and passing over into said transverse abutment surfaces (23, 24) by way of substantially right angles, and
a transverse end abutment surface (33),
**characterised in that** said lateral abutment surfaces (31, 32) pass over into said end abutment surface (33) by way of curved portions.

2. The compression ring of claim 1, wherein the curved portions encompass substantially a quarter of a circle.

3. The compression ring of claim 1 or 2, wherein said end portions (11a, 11b) are provided with additional substantially transversely extending mutually engaging abutment surfaces (12, 44).

4. The compression ring of any preceding claim, wherein the joints along at least some of the mutually engaging abutment surfaces (33, 12) are provided with swaged material displacement areas (50, 51) to limit the likelihood of relative radial movement between the end portions.

5. The compression ring of claim 4, wherein material displacement areas (50, 51) are provided along both the radially inner and outer surfaces of the ring within the area of the joints.

6. The compression ring of claim 4 or 5, wherein said material displacement areas (50, 51) are substantially symmetrically arranged on the radially inner and outer surfaces of a respective joint.

7. The compression ring of any one of claims 4 to 6, wherein said material displacement areas (50, 51) are realised by notches (90, 91) formed by swaging.

8. A method of forming from flat band material a compression ring having a mechanical connection in male and female end parts thereof, comprising the step of stamping out a flat blank with male and female end parts forming the complementary parts of the mechanical connection having in the male part a tongue-like extension (14) with an enlarged head portion (15) and a recess (22) of complementary shape in the female part,
wherein the head portion (15) includes
transverse abutment surfaces (23, 24) extending at substantially right angles to substantially longitudinally extending abutment surfaces of the tongue-like extension (14),
lateral abutment surfaces (31, 32) extending substantially in the longitudinal direction of the compression ring and passing over into said transverse abutment surfaces (23, 24) by way of substantially right angles, and
a transverse end abutment surface (33),
**characterised by** the step of providing a curved transition from said lateral abutment surfaces (31, 32) to said end abutment surface (33).

## Patentansprüche

1. Druckring mit einer mechanischen Verbindung in Form eines männlichen und eines dazu komplementären weiblichen Teils in jeweiligen Endabschnitten (11b, 11a) des Rings, wobei der männliche Teil einen zungenartigen Ansatz (14) mit einem vergrößerten Kopfteil (15) zum Eingriff in eine komplementär geformte Aussparung (22) in dem weiblichen Teil aufweist,
wobei der Kopfteil (15) folgende Elemente umfaßt:
quer verlaufende Stoßflächen (23, 24), die im wesentlichen rechtwinklig zu im wesentlichen in Längsrichtung verlaufenden Stoßflächen des zungenartigen Ansatzes (14) verlaufen,
seitliche Stoßflächen 31, 32), die im wesentlichen in Längsrichtung des Druckrings verlaufen und in die quer verlaufenden Stoßflächen (23, 24) im wesentlichen rechtwinklig übergehen, und
eine quer verlaufende stirnseitige Stoßfläche (33),
**dadurch gekennzeichnet, daß** die seitlichen Stoßflächen (31, 32) mit gekrümmten Abschnitten in die stirnseitige Stoßfläche (33) übergehen.

2. Druckring nach Anspruch 1, wobei die gekrümmten Abschnitte im wesentlichen einen Viertelkreisbogen überstreichen.

3. Druckring nach Anspruch 1 oder 2, wobei die Endabschnitte (11b, 11a) mit zusätzlichen im wesentlichen quer verlaufenden, ineinander greifenden Stoßflächen (12, 44) versehen sind.

4. Druckring nach einem der vorhergehenden Ansprüche, wobei die Verbindungen zwischen mindestens einigen der ineinander greifenden Stoßflächen (33, 12) mit Materialversatzbereichen (50, 51) versehen sind, um die Wahrscheinlichkeit einer radialen Relativbewegung zwischen den Endabschnitten (11b, 11a) zu verringern,

5. Druckring nach Anspruch 4, wobei die Materialversatzbereiche (50, 51) sowohl längs der radial inneren und als auch längs der radial äußeren Fläche des Rings in den Verbindungsbereichen vorgesehen sind.

6. Druckring nach Anspruch 4 oder 5, wobei die Materialversatzbereiche (50, 51) sowohl an der radial inneren und als auch an der radial äußeren Fläche der jeweiligen Verbindung im wesentlichen symmetrisch vorgesehen sind.

7. Druckring nach einem der Ansprüche 4 bis 6, wobei die Materialversatzbereiche (50, 51) in Form von durch Stauchen gebildeten Nuten (90, 91) vorliegen.

8. Verfahren zum Ausbilden eines Druckrings, der in seinem männlichen und seinem weiblichen Endabschnitt eine mechanische Verbindung bildet, aus einem flachen Bandmaterial, wobei ein flacher Rohling mit die komplementären Teile der mechanischen Verbindung bildenden männlichen und weiblichen Endabschnitten ausgestanzt wird, der in dem männlichen Teil einen zungenartigen Ansatz (14) mit einem vergrößerten Kopfteil (15) und eine komplementär geformte Aussparung (22) in dem weiblichen Teil aufweist,
wobei der Kopfteil (15) folgende Elemente umfaßt:
quer verlaufende Stoßflächen (23, 24), die im wesentlichen rechtwinklig zu im wesentlichen in Längsrichtung verlaufenden Stoßflächen des zungenartigen Ansatzes (14) verlaufen,
seitliche Stoßflächen 31, 32), die im wesentlichen in Längsrichtung des Druckrings verlaufen und in die quer verlaufenden Stoßflächen (23, 24) im wesentlichen rechtwinklig übergehen, und
eine quer verlaufende stirnseitige Stoßfläche (33),
**dadurch gekennzeichnet, daß** von den seitlichen Stoßflächen (31, 32) zu der stimseitigen Stoßfläche (33) ein gekrümmter Übergang vorgesehen wird.

## Revendications

1. Bague de compression avec un raccordement mécanique sous la forme de parties mâle et femelle complémentaires dans des parties d'extrémité respectives (11a, 11b) de la bague, la partie mâle comportant un prolongement en forme de languette (14) avec une partie de tête agrandie (15) adaptée pour s'engager dans une cavité (22) de forme complémentaire dans la partie femelle,
dans laquelle la partie de tête (15) comprend :
des surfaces de butée transversales (23, 24) s'étendant à angle sensiblement droit par rapport à des surfaces de butée s'étendant sensiblement longitudinalement du prolongement en forme de languette (14),
des surfaces de butée latérales (31, 32) s'étendant sensiblement dans la direction longitudinale de la bague de compression et se raccordant aux dites surfaces de butée transversales (23, 24) par des angles sensiblement droits, et
une surface de butée d'extrémité transversale (33),
**caractérisée en ce que** lesdites surfaces de butée latérales (31, 32) se raccordent à ladite surface de butée d'extrémité (33) par des parties courbes.

2. Bague de compression selon la revendication 1, dans laquelle les parties courbes comprennent sensiblement un quart de cercle.

3. Bague de compression selon la revendication 1 ou 2, dans laquelle lesdites parties d'extrémité (11a, 11b) comportent des surfaces de butée additionnelles venant mutuellement en prise s'étendant sensiblement transversalement (12, 44).

4. Bague de compression selon l'une quelconque des revendications précédentes, dans laquelle les joints le long d'au moins certaines des surfaces de butée venant mutuellement en prise (33, 12) comportent des zones de déplacement de matériau matricées (50, 51) pour limiter la probabilité de déplacement radial relatif entre les parties d'extrémité.

5. Bague de compression selon la revendication 4, dans laquelle les zones de déplacement de matériau (50, 51) sont disposées le long des deux surfaces radialement intérieure et extérieure de la bague à l'intérieur de la zone des joints.

6. Bague de compression selon la revendication 4 ou 5, dans laquelle lesdites zones de déplacement de matériau (50, 51) sont disposées de façon sensiblement symétrique sur les surfaces radialement intérieure et extérieure d'un joint respectif.

7. Bague de compression selon l'une quelconque des revendications 4 à 6, dans laquelle lesdites zones de déplacement de matériau (50, 51) sont constituées par des encoches (90, 91) formées par matriçage.

8. Procédé de formation, à partir d'un matériau en bande plate, d'une bague de compression comportant un raccordement mécanique dans des parties d'extrémité mâle et femelle de celle-ci, comprenant les étapes consistant à matricer une ébauche plate avec des parties d'extrémité mâle et femelle formant les parties complémentaires du raccordement mécanique, comportant dans la partie mâle un prolongement en forme de languette (14) avec une partie de tête agrandie (15) et une cavité (22) de forme complémentaire dans la partie femelle,
dans lequel la partie de tête (15) comprend :
des surfaces de butée transversales (23, 24) s'étendant à angle sensiblement droit par rapport à des surfaces de butée s'étendant sensiblement longitudinalement du prolongement en forme de languette (14),
des surfaces de butée latérales (31, 32) s'étendant sensiblement dans la direction longitudinale de la bague de compression et se raccordant aux dites surfaces de butée transversales (23, 24) par des angles sensiblement droits, et
une surface de butée d'extrémité transversale (33),
**caractérisé par** l'étape consistant à réaliser une transition courbe entre lesdites surfaces de butée latérales (31, 32) et ladite surface de butée d'extrémité (33).
